# EUROPEAN PATENT APPLICATION

(11) **EP 4 141 823 A1**
(43) Date of publication of application: **01.03.2023**
(21) Application number: 21217168.0
(22) Date of filing: 22.12.2021
(51) Int. Cl.: G07C 5/00, B60W 50/00, G01M 17/00, G01S 7/00

(54) **METHOD, SYSTEM, AND APPARATUS FOR REMOTELY CALIBRATING ADVANCED DRIVER ASSISTANCE SYSTEM, AND COMPUTER DEVICE**

(30) Priority: 31.08.2021 CN 202111008210
(71) Applicant: Thinkcar Tech Co., Ltd., Shenzhen, Guangdong (CN)
(72) Inventor: Tan, Bin, Shenzhen (CN); Xiao, Lingcong, Shenzhen (CN); Li, Jichong, Shenzhen (CN)
(74) Representative: Petraz, Gilberto Luigi

(57) **Abstract**

This application relates to the field of automobile diagnosis technologies, and discloses a method and apparatus for remotely calibrating an advanced driver assistance system (ADAS), and a computer device. A diagnosis device may establish a remote connection to a client to directly remotely calibrate the ADAS of an automobile without the limitation of a distance. Therefore, a repair factory does not need to purchase diagnosis devices for all vehicle models. Instead, the diagnosis device can remotely calibrate the ADAS for the automobiles in the repair factory. In this way, the operation costs of the repair factory are greatly reduced. By means of the remote connection established between the client and the diagnosis device, the application of the diagnosis device is no longer limited to a specific area. Instead, the diagnosis device is applicable to any place where a remote connection can be established. Therefore, the operation process of the ADAS calibration is becoming convenient, thereby promoting the development of the maintenance industry.

## Description

### TECHNICAL FIELD

This application relates to the field of automobile diagnosis technologies, and in particular, to a method, system, and apparatus for remotely calibrating an advanced driver assistance system (ADAS), and a computer device.

### BACKGROUND

An ADAS is an active security technology of collecting environmental data inside and outside a vehicle first by using various sensors mounted to the vehicle, and then performing technical processing such as identification, detection, and tracking of static and dynamic objects, to enable a driver to perceive a potential danger as quickly as possible, thereby drawing attention and improving security.

In the prior art, generally, a professional serviceman requires both an ADAS calibration device and a diagnosis device to complete ADAS calibration on an automobile. However, a different diagnosis device supports a different vehicle model, and the diagnosis device is expensive. Therefore, an ordinary repair factory usually purchases a few diagnosis devices, for example, two or three diagnosis devices having different functions to diagnose and maintain all automobiles. Since various automobiles are present and the ADAS calibration is complex, the diagnosis devices in the repair factory fail to support ADAS calibration of the various automobiles.

### SUMMARY OF THE APPLICATION

This application is mainly intended to provide a method, system, and apparatus for remotely calibrating an ADAS, and a computer device, to resolve the technical problem in the prior art that a diagnosis device fails to support ADAS calibration of various automobiles.

This application provides a method for remotely calibrating an ADAS, which is applicable to a diagnosis device and includes:
establishing a remote connection to a client to acquire parameter information of an automobile, where the client is any intelligent terminal having communication and diagnosis functions, and establishes a communicative connection to the automobile;
performing fault diagnosis on the automobile according to the parameter information to obtain a fault code;
selecting an ADAS calibration instruction corresponding to the fault code, and transmitting the ADAS calibration instruction to the client, where the client adjusts a distance between the automobile and an ADAS calibration device according to the received ADAS calibration instruction;
receiving an adjustment completion instruction fed back by the client according to the ADAS calibration instruction; and
performing remote ADAS calibration on the automobile according to the adjustment completion instruction.

Preferably, after the step of performing the remote ADAS calibration on the automobile according to the adjustment completion instruction, the method includes:
receiving a clear instruction, and clearing the fault code according to the clear instruction;
receiving a fault code reading instruction, and reading the fault code according to the fault code reading instruction; and
determining whether the fault code is readable, and if the fault code is not readable, determining that the remote ADAS calibration succeeds.

Preferably, the step of establishing the remote connection to the client to acquire the parameter information of the automobile includes:
establishing a communication link with a server, where the server is remotely communicatively connected to the client, and receives automobile information transmitted by the client; and
reading a vehicle identification number of the automobile from the automobile information of the server, and acquiring the parameter information of the automobile according to the vehicle identification number, where the parameter information includes position information, vehicle model information, and ADAS information of the automobile.

Preferably, the step of performing the fault diagnosis on the automobile according to the parameter information to obtain the fault code includes:
performing fault diagnosis on a plurality of systems of the automobile according to the parameter information to obtain a diagnosis result, where the systems include a driving system, an ADAS, and a vehicle body system;
determining whether the ADAS has a fault according to the diagnosis result;
receiving an action instruction and entering the ADAS according to the action instruction if the ADAS has a fault; and
reading the fault code from the ADAS.

Preferably, the step of selecting, according to the fault code, the ADAS calibration instruction corresponding to the fault code and transmitting the ADAS calibration instruction to the client includes:
reading fault code information, where the fault code information includes a fault code number, fault code content, and a fault code state, and the fault code content is information about an ADAS sensor required to be calibrated;
selecting an ADAS calibration instruction corresponding to the fault code;
generating corresponding function information according to the ADAS calibration instruction, where the function information includes usage information and description information;
receiving a confirmation signal for the ADAS calibration instruction, and generating calibration content according to the confirmation signal, where the calibration content includes text information and picture information; and
transmitting the calibration content to the client.

This application further provides a system for remotely calibrating an ADAS, which includes:
a client; and
a diagnosis device in remote connection to the client, and configured to acquire parameter information of an automobile;
where the client is any intelligent terminal having communication and diagnosis functions, and in a communication connection to the automobile; and
the diagnosis device is configured to:
perform fault diagnosis on the automobile according to the parameter information to obtain a fault code;
select an ADAS calibration instruction corresponding to the fault code, and transmit the ADAS calibration instruction to the client, where the client adjusts a distance between the automobile and an ADAS calibration device according to the ADAS calibration instruction received;
receive an adjustment completion instruction fed back by the client according to the ADAS calibration instruction; and
perform remote ADAS calibration on the automobile according to the adjustment completion instruction.

Preferably, the system further includes a communication device. The communication device is in remote connection to the client for remote communication with the client.

This application further provides an apparatus for remotely calibrating an ADAS, which includes:
a remote connection establishing module, configured to establish a remote connection to a client to acquire parameter information of an automobile, where the client is any intelligent terminal having communication and diagnosis functions, and in a communication connection to the automobile;
a fault diagnosis module, configured to perform fault diagnosis on the automobile according to the parameter information to obtain a fault code;
a selection module, configured to select an ADAS calibration instruction corresponding to the fault code, and transmit the ADAS calibration instruction to the client, where the client adjusts a distance between the automobile and an ADAS calibration device according to the ADAS calibration instruction received;
a receiving module, configured to receive an adjustment completion instruction fed back by the client according to the ADAS calibration instruction; and
an ADAS calibration module, configured to perform remote ADAS calibration on the automobile according to the adjustment completion instruction.

This application further provides a computer device, which includes a memory and a processor. The memory stores a computer program. When the processor executes the computer program, any one of the above-mentioned method for remotely calibrating an ADAS is performed.

This application further provides a computer-readable storage medium, which has a computer program stored thereon. When the computer program is executed by a processor, any one of the above-mentioned method for remotely calibrating an ADAS is performed.

Beneficial effects of this application are as follows. A remote connection is established to the client, so that when the client fails to perform ADAS calibration on automobiles of some vehicle models, a remotely connected device terminal may acquire parameter information of the automobiles, generate, according to a fault code, an ADAS calibration instruction corresponding to the fault code, and transmit the ADAS calibration instruction to the client, and the client adjusts distances between the automobiles and the ADAS calibration device according to the ADAS calibration instruction. After the adjustment is completed, the diagnosis device starts to perform remote ADAS calibration on the automobiles. The diagnosis device may establish a remote connection to the client to directly remotely calibrate the ADAS of the automobile without the limitation of a distance. Therefore, a repair factory does not need to purchase diagnosis devices for all vehicle models. Instead, the diagnosis device can remotely calibrate the ADAS for the automobiles in the repair factory. In this way, the operation costs of the repair factory are greatly reduced. By means of the remote connection established between the client and the diagnosis device, the application of the diagnosis device is no longer limited to a specific area. Instead, the diagnosis device is applicable to any place where a remote connection can be established. Therefore, the operation process of the ADAS calibration is becoming convenient, thereby promoting the development of the maintenance industry.

### BRIEF DESCRIPTION OF THE DRAWINGS

FIG. 1 is a schematic flowchart of a method for remotely calibrating an ADAS according to an embodiment of this application;
FIG. 2 is a schematic structural diagram of an apparatus for remotely calibrating an ADAS according to an embodiment of this application; and
FIG. 3 is a schematic diagram of an internal structure of a computer device according to an embodiment of this application.

The implementation of the objectives, functional features and advantages of this application will be further described with reference to the accompanying drawings in accordance with the embodiments.

### DETAILED DESCRIPTION OF THE EMBODIMENTS

It should be understood that the specific embodiments described herein are only used to describe this application, and are not intended to limit this application.

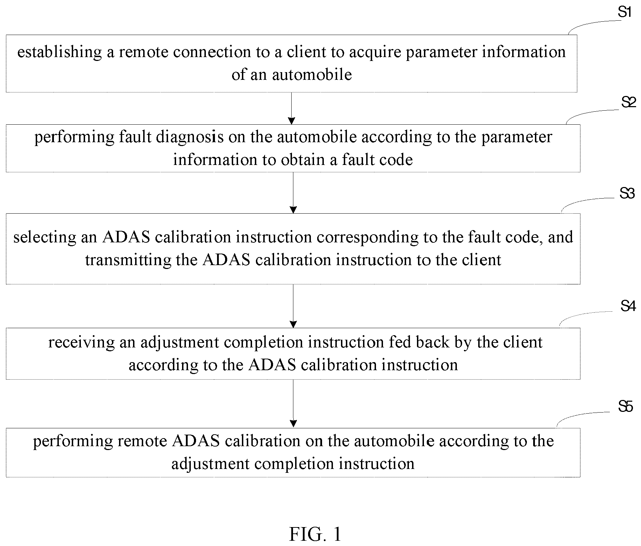

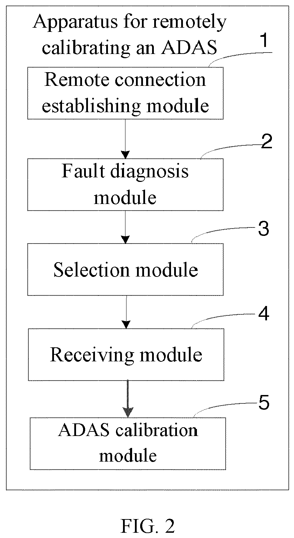

As shown in FIGs. 1 to 3, this application provides a method for remotely calibrating an ADAS, which is applicable to a diagnosis device and includes:
S1: establishing a remote connection to a client to acquire parameter information of an automobile, where the client is any intelligent terminal having communication and diagnosis functions, and in a communication connection to the automobile;
S2: performing fault diagnosis on the automobile according to the parameter information to obtain a fault code;
S3: selecting an ADAS calibration instruction corresponding to the fault code, and transmitting the ADAS calibration instruction to the client, where the client adjusts a distance between the automobile and an ADAS calibration device according to the ADAS calibration instruction received;
S4: receiving an adjustment completion instruction fed back by the client according to the ADAS calibration instruction; and
S5: performing remote ADAS calibration on the automobile according to the adjustment completion instruction.

As described in the above steps S1 to S5, a remote connection is established to the client, so that the client may establish a remote connection to a diagnosis device capable of performing ADAS calibration on an automobile of a specific vehicle model when failing to perform ADAS calibration on the automobile of the vehicle model, so as to perform ADAS calibration on the automobile of the vehicle model by the diagnosis device. The client may transmit parameter information of the automobile to the diagnosis device, so that the diagnosis device performs fault diagnosis on the automobile according to the parameter information, selects, according to the fault code, an ADAS calibration instruction corresponding to the fault code, and then transmits the ADAS calibration instruction to the client. In this way, although the client cannot perform ADAS calibration on the automobile of the vehicle model, the client may adjust a distance between the automobile of the vehicle model and the ADAS calibration device properly based on the ADAS calibration instruction received from the diagnosis device. After adjustment is completed, the diagnosis device receives an adjustment completion instruction fed back by the client and then directly performs ADAS calibration on the automobile. In this way, ADAS calibration of the automobile is successfully performed. When the client fails to perform ADAS calibration on automobiles of some vehicle models, a remote connection is selectively established to a diagnosis device corresponding to the vehicle models, so that the remote diagnosis device can directly perform remote ADAS calibration on the automobiles without the limitation of a distance. Therefore, a repair factory does not need to purchase diagnosis devices for all vehicle models. Instead, the diagnosis device can remotely calibrate the ADAS for the automobiles in the repair factory. In this way, the operation costs of the repair factory are greatly reduced. By means of the remote connection established between the client and the diagnosis device, the application of the diagnosis device is no longer limited to a specific area. Instead, the diagnosis device is applicable to any place where a remote connection can be established. Therefore, the operation process of the ADAS calibration is becoming convenient, thereby promoting the development of the maintenance industry.

In an embodiment, after step S5, the method further includes:
S6: receiving a clear instruction, and clearing the fault code according to the clear instruction;
S7: receiving a fault code reading instruction, and reading the fault code according to the fault code reading instruction; and
S8: determining whether the fault code is readable, and determining that the remote ADAS calibration succeeds if the fault code is not readable.

As described in the above steps S6 to S8, after the ADAS calibration is performed on the automobile, the clear instruction is received to clear the fault code, and then the fault code is read. It may be determined whether the remote ADAS calibration succeeds according to whether the fault code is readable. If the fault code is not readable, it indicates that the fault has been cleared, and the ADAS calibration succeeds. More preferably, after the ADAS calibration of the automobile is completed, the method may further include: acquiring parameter data of the automobile, performing fault diagnosis on the automobile according to the parameter data of the automobile, determining whether an ADAS-related fault code is generated, and if ADAS-related fault code is generated, determining that the calibration succeeds, or if the ADAS-related fault code is generated, returning to step S3. By performing fault diagnosis on the automobile again, it may be determined whether the remote ADAS calibration succeeds. If yes, the remote ADAS calibration ends, or if no, re-calibration may be performed. In this way, the accuracy of the remote ADAS calibration by the diagnosis device can be verified, thereby improving the quality of the remote ADAS calibration by the diagnosis device.

In an embodiment, step S1 includes:
S11: establishing a communication link with a server, where the server is in remote communication connection to the client, and receives automobile information transmitted by the client; and
S12: reading a vehicle identification number of the automobile from the automobile information on the server, and acquiring the parameter information of the automobile according to the vehicle identification number, where the parameter information includes position information, vehicle model information, and ADAS information of the automobile.

As described in the above steps S1 to S12, a communication link is established with the server, so that the server acquires the information about the automobile that is transmitted by the client, and the parameter information of the automobile is transmitted to the server. When a network state is unstable, the server can store the parameter information of the automobile and then transmit the parameter information of the automobile to the diagnosis device. In this way, it can be ensured that the parameter information of the automobile received by the diagnosis device is complete, facilitating follow-up fault diagnosis on the automobile according to the parameter information of the automobile.

In an embodiment, step S2 includes:
S21: performing fault diagnosis on a plurality of systems of the automobile according to the parameter information to obtain a diagnosis result, where the systems include a driving system, an ADAS, and a vehicle body system;
S22: determining whether the ADAS has a fault according to the diagnosis result;
S23: receiving an action instruction, and entering the ADAS according to the action instruction if the ADAS has a fault; and
S24: reading the fault code from the ADAS.

As described in the above steps S21 to S24, during the fault diagnosis of the automobile, fault diagnosis is first performed on the plurality of systems of the automobile, that is, whole body detection is quickly performed on the automobile. Therefore, it may be determined whether the ADAS has a fault according to the diagnosis result. If the ADAS has a fault, the diagnosis device may enter the ADAS again to read a corresponding fault code from the ADAS. In this way, the diagnosis device reads the fault code corresponding to the ADAS, instead of directly reading all fault codes and then searching the fault code corresponding to the ADAS from all of the fault codes, reducing the loss caused by calculation and avoiding operation suspension of the diagnosis device.

In an embodiment, step S3 includes:
S31: reading fault code information, where the fault code information includes a fault code number, fault code content, and a fault code state, and the fault code content is information about an ADAS sensor to be calibrated;
S32: selecting an ADAS calibration instruction corresponding to the fault code;
S33: generating corresponding function information according to the ADAS calibration instruction, where the function information includes usage information and description information;
S34: receiving a confirmation signal for the ADAS calibration instruction, and generating calibration content according to the confirmation signal, where the calibration content includes text information and picture information; and
S35: transmitting the calibration content to the client.

As described in the above steps S31 to S35, the fault code information is read, the ADAS calibration instruction corresponding to the fault code information is selected according to the fault code content corresponding to the fault code information, and corresponding function information is generated according to the ADAS calibration instruction. Since the ADAS calibration instruction generally includes adaptive cruise control (ACC), autonomous emergency braking (AEB), a lane keeping system (LKS), automatic parking, adaptive front light (AFL) and the like, a worker using the diagnosis device may view the usage information and the description information in the function information to confirm again specific content that requires ADAS calibration, so as to avoid ADAS calibration errors. When the worker confirms an ADAS to be calibrated, the worker clicks/taps a confirmation button, so that the diagnosis device receives the confirmation signal. The diagnosis device generates calibration content according to the confirmation signal and transmits the calibration content to the client in a form of texts, pictures, videos, or the like. A serviceman of the client may adjust, according to the calibration content, an actual distance between the automobile and the ADAS calibration device to be same as a distance in the calibration content, thereby facilitating the remote ADAS calibration by the diagnosis device.

This application further provides a system for remotely calibrating an ADAS, which includes a client and a diagnosis device. The diagnosis device is in remote connection to the client, and is configured to acquire parameter information of an automobile. The client is any intelligent terminal having communication and diagnosis functions, and in a communication connection to the automobile.

Further, the diagnosis device is configured to: perform fault diagnosis on the automobile according to the parameter information to obtain a fault code; select an ADAS calibration instruction corresponding to the fault code, and transmit the ADAS calibration instruction to the client, where the client adjusts a distance between the automobile and an ADAS calibration device according to the received ADAS calibration instruction; receive an adjustment completion instruction fed back by the client according to the ADAS calibration instruction; and perform remote ADAS calibration on the automobile according to the adjustment completion instruction.

More preferably, the client may also directly perform fault diagnosis on the automobile, generate a fault code, and then transmit the fault code to the diagnosis device, so that the diagnosis device directly generates a corresponding ADAS calibration instruction according to the fault code. In this manner, the diagnosis device can directly perform remote ADAS calibration on the automobile based on the fault code of the client without a need of acquiring the parameter information of the automobile, thereby enhancing the efficiency of the remote ADAS calibration.

In an embodiment, the system further includes a communication device. The communication device is remotely connected to the client and is configured to remotely communicate with the client. By means of the communication device, the serviceman at the client side may remotely communicate with the worker using the diagnosis device. Therefore, during the ADAS calibration of the automobile by the diagnosis device, the worker may directly communicate with the serviceman. In this way, the efficiency of the remote ADAS calibration can be enhanced.

This application further provides an apparatus for remotely calibrating an ADAS, which includes:
a remote connection establishing module 1, configured to establish a remote connection to a client to acquire parameter information of an automobile, where the client is any intelligent terminal having communication and diagnosis functions, and in communication connection to the automobile;
a fault diagnosis module 2, configured to perform fault diagnosis on the automobile according to the parameter information to obtain a fault code;
a selection module 3, configured to select an ADAS calibration instruction corresponding to the fault code, and transmit the ADAS calibration instruction to the client, where the client adjusts a distance between the automobile and an ADAS calibration device according to the received ADAS calibration instruction;
a receiving module 4, configured to receive an adjustment completion instruction fed back by the client according to the ADAS calibration instruction; and
an ADAS calibration module 5, configured to perform remote ADAS calibration on the automobile according to the adjustment completion instruction.

In an embodiment, the apparatus for remotely calibrating an ADAS further includes:
a clear module, configured to receive a clear instruction, and clear the fault code according to the clear instruction;
a reading module, configured to receive a fault code reading instruction, and read the fault code according to the fault code reading instruction;
a determination module, configured to determine whether the fault code is readable, and determine that the remote ADAS calibration succeeds if the fault code is not readable; and
a communication module, in remote connection to the client for remote communication with the client.

In an embodiment, the remote connection establishing module 1 includes:
an establishment unit, configured to establish a communication link with a server, where the server is in remote communication connection to the client, and receives automobile information transmitted by the client; and
a first reading unit, configured to read a vehicle identification number of the automobile from the automobile information on the server, and acquire the parameter information of the automobile according to the vehicle identification number, where the parameter information includes position information, vehicle model information, and ADAS information of the automobile.

In an embodiment, the fault diagnosis module 2 includes:
a fault diagnosis unit, configured to perform fault diagnosis on a plurality of systems of the automobile according to the parameter information to obtain a diagnosis result, where the systems include a driving system, an ADAS, and a vehicle body system;
a determination unit, configured to determine whether the ADAS has a fault according to the diagnosis result;
an entering unit, configured to receive an action instruction and enter the ADAS according to the action instruction if the ADAS has a fault; and
a second reading unit, configured to read the fault code from the ADAS.

In an embodiment, the selection module 3 includes:
a third reading unit, configured to read fault code information, where the fault code information includes a fault code number, fault code content, and a fault code state, and the fault code content is information about an ADAS sensor to be calibrated;
a selection unit, configured to select an ADAS calibration instruction corresponding to the fault code;
a generation unit, configured to generate corresponding function information according to the ADAS calibration instruction, where the function information includes usage information and description information;
a confirmation unit, configured to receive a confirmation signal for the ADAS calibration instruction, and generate calibration content according to the confirmation signal, where the calibration content includes text information and picture information; and
a transmitting unit, configured to transmit the calibration content to the client.

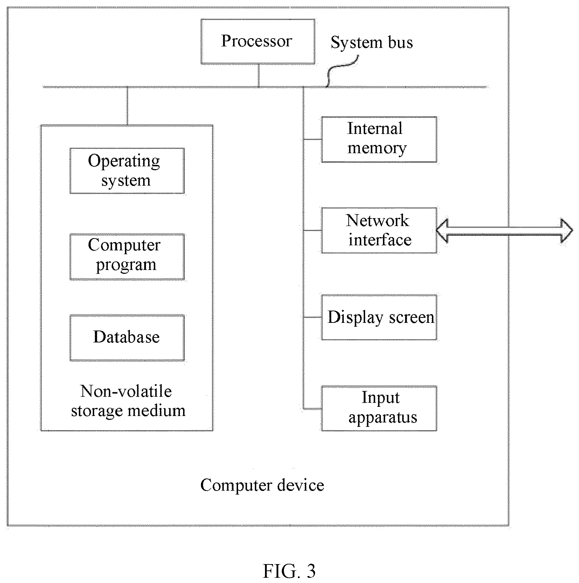

As shown in FIG. 3, this application further provides a computer device. The computer device may be a server. An internal structure of the computer device may be shown in FIG. 3. The computer device includes a processor, a memory, a network interface, and a database connected through a system bus. The processor of the computer device is configured to provide computing and control capabilities. The memory of the computer device includes a non-volatile storage medium and an internal memory. The non-volatile storage medium stores an operating system, a computer program, and the database. The internal memory provides an environment for running of the operating system and the computer program in the non-volatile storage medium. The database of the computer device is configured to store all data required for the process of the method for remotely calibrating an ADAS. The network interface of the computer device is configured to communicate with an external terminal through a network connection. The computer program, when executed by the processor, causes the method for remotely calibrating an ADAS to be performed.

A person skilled in the art may understand that, the structure shown in FIG. 3 is only a block diagram of a partial structure related to the solution of this application, and does not constitute a limitation to the computer device to which the solution of this application is applied.

This embodiment further provides a computer-readable storage medium, storing a computer program, where any one of the foregoing methods for remotely calibrating an ADAS is implemented when the computer program is executed by a processor.

A person of ordinary skill in the art may understand that some or all procedures in the foregoing method embodiments may be implemented by a computer program instructing related hardware. The computer program may be stored in a non-volatile computer-readable storage medium, and when the computer program is executed, the procedures of the foregoing method embodiments may be performed. Any reference to a memory, a storage, a database, or another medium used in the embodiments provided in this application can include a non-volatile and/or volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external high-speed cache. By way of description rather than limitation, the RAM may be obtained in a plurality of forms, such as a static RAM (SRAM), a dynamic RAM (DRAM), a synchronous DRAM (SDRAM), a double data rate SDRAM (DDRSDRAM), an enhanced SDRAM (ESDRAM), a Synchlink DRAM (SLDRAM), a Rambus direct RAM (RDRAM), a direct Rambus dynamic RAM (DRDRAM), and a Rambus dynamic RAM (RDRAM) or the like.

It should be noted that the terms "include", "comprise", or any other variation thereof in this specification is intended to cover a non-exclusive inclusion, which specifies the presence of stated processes, apparatuses, objects, or methods, but do not preclude the presence or addition of one or more other processes, apparatuses, objects, or methods. Without more limitations, elements defined by the sentence "including one" does not exclude that there are still other same elements in the processes, apparatuses, objects, or methods.

The foregoing descriptions are preferred embodiments of this application, and the protection scope of this application is not limited thereto. All equivalent structure or process changes made according to the content of this specification and accompanying drawings in this application or by directly or indirectly applying this application in other related technical fields shall fall within the protection scope of this application.

## Claims

1. A method for remotely calibrating an advanced driver assistance system (ADAS), the method being applicable to a diagnosis device, and comprising:
establishing a remote connection to a client to acquire parameter information of an automobile, wherein the client is any intelligent terminal having communication and diagnosis functions, and in a communication connection to the automobile;
performing fault diagnosis on the automobile according to the parameter information to obtain a fault code;
selecting an ADAS calibration instruction corresponding to the fault code, and transmitting the ADAS calibration instruction to the client, wherein the client adjusts a distance between the automobile and an ADAS calibration device according to the ADAS calibration instruction received;
receiving an adjustment completion instruction fed back by the client according to the ADAS calibration instruction; and
performing remote ADAS calibration on the automobile according to the adjustment completion instruction.

2. The method for remotely calibrating an ADAS according to claim 1, wherein after performing the remote ADAS calibration on the automobile according to the adjustment completion instruction, the method comprises:
receiving a clear instruction, and clearing the fault code according to the clear instruction;
receiving a fault code reading instruction, and reading the fault code according to the fault code reading instruction; and
determining whether the fault code is readable, and determining that the remote ADAS calibration succeeds if the fault code is not readable.

3. The method for remotely calibrating an ADAS according to claim 1, wherein establishing the remote connection to the client to acquire the parameter information of the automobile comprises:
establishing a communication link with a server, wherein the server is in remote communication connection to the client, and receives automobile information transmitted by the client; and
reading a vehicle identification number of the automobile from the automobile information in the server, and acquiring the parameter information of the automobile according to the vehicle identification number, wherein the parameter information includes position information, vehicle model information, and ADAS information of the automobile.

4. The method for remotely calibrating an ADAS according to claim 1, wherein performing the fault diagnosis on the automobile according to the parameter information to obtain the fault code comprises:
performing the fault diagnosis on a plurality of systems of the automobile according to the parameter information to obtain a diagnosis result, wherein the systems includes a driving system, an ADAS, and a vehicle body system;
determining whether the ADAS has a fault according to the diagnosis result;
receiving an action instruction and entering the ADAS according to the action instruction if the ADAS has a fault; and
reading the fault code from the ADAS.

5. The method for remotely calibrating an ADAS according to claim 1, wherein selecting the ADAS calibration instruction corresponding to the fault code and transmitting the ADAS calibration instruction to the client comprises:
reading fault code information, wherein the fault code information includes a fault code number, fault code content, and a fault code state, and the fault code content is information of an ADAS sensor to be calibrated;
selecting the ADAS calibration instruction corresponding to the fault code;
generating corresponding function information according to the ADAS calibration instruction, wherein the function information includes usage information and description information;
receiving a confirmation signal for the ADAS calibration instruction, and generating calibration content according to the confirmation signal, wherein the calibration content includes text information and picture information; and
transmitting the calibration content to the client.

6. A system for remotely calibrating an ADAS, comprising:
a client; and
a diagnosis device in remote connection to the client, and configured to acquire parameter information of an automobile,
wherein the client is any intelligent terminal having communication and diagnosis functions, and in communication connection to the automobile; and
the diagnosis device is further configured to:
perform fault diagnosis on the automobile according to the parameter information to obtain a fault code;
select an ADAS calibration instruction corresponding to the fault code, and transmit the ADAS calibration instruction to the client, wherein the client adjusts a distance between the automobile and an ADAS calibration device according to the received ADAS calibration instruction;
receive an adjustment completion instruction fed back by the client according to the ADAS calibration instruction; and
perform remote ADAS calibration on the automobile according to the adjustment completion instruction.

7. The system for remotely calibrating an ADAS according to claim 6, further comprising a communication device, wherein the communication device is in remote connection to the client for remote communication.

8. An apparatus for remotely calibrating an ADAS, comprising:
a remote connection establishing module, configured to establish a remote connection to a client to acquire parameter information of an automobile, wherein the client is any intelligent terminal having communication and diagnosis functions, and is in a communication connection to the automobile;
a fault diagnosis module, configured to perform fault diagnosis on the automobile according to the parameter information to obtain a fault code;
a selection module, configured to select an ADAS calibration instruction corresponding to the fault code, and transmit the ADAS calibration instruction to the client, wherein the client adjusts a distance between the automobile and an ADAS calibration device according to the ADAS calibration instruction received;
a receiving module, configured to receive an adjustment completion instruction fed back by the client according to the ADAS calibration instruction; and
an ADAS calibration module, configured to perform remote ADAS calibration on the automobile according to the adjustment completion instruction.

9. A computer device, comprising a memory and a processor, wherein the memory stores a computer program, and when the processor executes the computer program, the method for remotely calibrating an ADAS according to any one of claims 1 to 5 is performed.

10. A computer-readable storage medium, having a computer program stored thereon, wherein when the computer program is executed by a processor, the method for remotely calibrating an ADAS according to any one of claims 1 to 5 is performed.
